Europäisches Patentamt

(19) European Patent Office

Office européen des brevets

(11) Publication number: **0 265 376**
**A1**

(12) **EUROPEAN PATENT APPLICATION**

(21) Application number: **87810558.4**

(22) Date of filing: **25.09.87**

(51) Int. Cl.⁴: **B 05 B 5/08**
**B 05 D 7/00, A 01 C 1/06,**
**B 01 J 2/00**

(30) Priority: **01.10.86 US 914059**

(43) Date of publication of application:
**27.04.88 Bulletin 88/17**

(84) Designated Contracting States:
**AT BE CH DE FR GB IT LI NL SE**

(71) Applicant: **CIBA-GEIGY AG**
**Klybeckstrasse 141**
**CH-4002 Basel (CH)**

(72) Inventor: **Inculet, Ion I., Prof.**
**81, Lloyd Manor Crescent**
**London Ontario N6H 3Z4 (CA)**

(54) **Coating of small objects.**

(57) A method and apparatus for coating small objects utilises a rotating electric field generated by electrodes (40) within the coating chamber (20). The coating material is electrostatically charged by corona discharge pins (36) and is caused to translate as it falls through the chamber. This increases the probability of contact with the object to be coated.

FIG. 1

EP 0 265 376 A1

Bundesdruckerei Berlin

## Description

<center>Coating of Small Objects</center>

The present invention relates to a method and apparatus for applying a coating to a multitude of small objects.

There are many applications in which it is desirable that a material be applied as a coating to small objects. Usually, the objects are relatively large compared with the coating and it is therefore essential to ensure that the coating is applied as uniformly and as efficiently as possible. A typical application is the coating of seeds with chemicals to promote growth or prevent disease in the seeds.

In order to coat the objects with the material it is necessary for the objects to pass through the material. At the same time it is necessary that the coating material be applied as evenly as possible and in a controlled manner. This requires a relatively long contact period between the coating and the objects, which is not readily achieved.

A technique presently used is to pass the object through a liquid mist chamber. However, to allow proper coating of the object, either successive passes must be made or the chamber must be relatively large to provide the required path length.

It is therefore an object of the present invention to provide a method and apparatus for obviating or mitigating the above disadvantages.

According, therefore, to the present invention there is provided a method of applying a coating to objects comprising the steps of producing an aerosol of discrete particles of said coating within a chamber, electrostatically charging said particles, generating a rotating electric field within said chamber to induce translation of said particles within said chamber and passing said objects through said chamber to contact said particles.

According also to the present invention there is provided a method of applying a coating to an object comprising the steps of producing an aerosol of discrete particles of said coating within a chamber, electrostatically charging said particles, generating an oscillating electric field within said chamber to induce translation of said particles within said chamber and passing said objects through said chamber to contact said particles.

According also to the present invention, there is provided a method of applying a coating to an object comprising the steps of producing an aerosol of discrete particles of said coating within a chamber, electrostatically charging said particles, passing said objects through said chamber to contact said particles and generating a rotating electric field within said chamber to impart oscillatory motion to each particle in a direction generally transverse to the direction of motion of articles passing through said chamber and thereby increase the probability of contact of said objects within said particles.

According also to the present invention there is provided apparatus for applying a coating to a multitude of small objects comprising a chamber, atomising means to produce an aerosol of said coating in said chamber, charging means to impress an electrostatic charge upon the particles of said aerosol, means to introduce said objects into said chamber and to cause them to pass therealong and means to generate a rotating electric field in said chamber, whereby a charged particle within said chamber is caused to translate relative thereto.

Preferably, a rotating electric field is generated within the chamber so that the object falling through the chamber is circumscribed by the particles of the aerosol. This increases the time available for the coating to contact the object and hence increase the coating efficiency. By maintaining the coating in an aerosol form, the coating is not presented in bulk to the object so that separation of the object from the coating material can readily be achieved.

Preferably, the object is recirculated within the chamber to allow for successive passes through the coating material to further increase the coating.

Embodiments of the invention will now be described by way of example only with reference to the accompanying drawings in which

figure 1 is a section through a coating apparatus

figure 2 is a plan view of the coating apparatus of figure 1

figure 3 is a view of an alternative embodiment of a portion of the apparatus shown in figure 1

and figure 4 is a plan view similar to figure 2 showing a further embodiment of the coating apparatus.

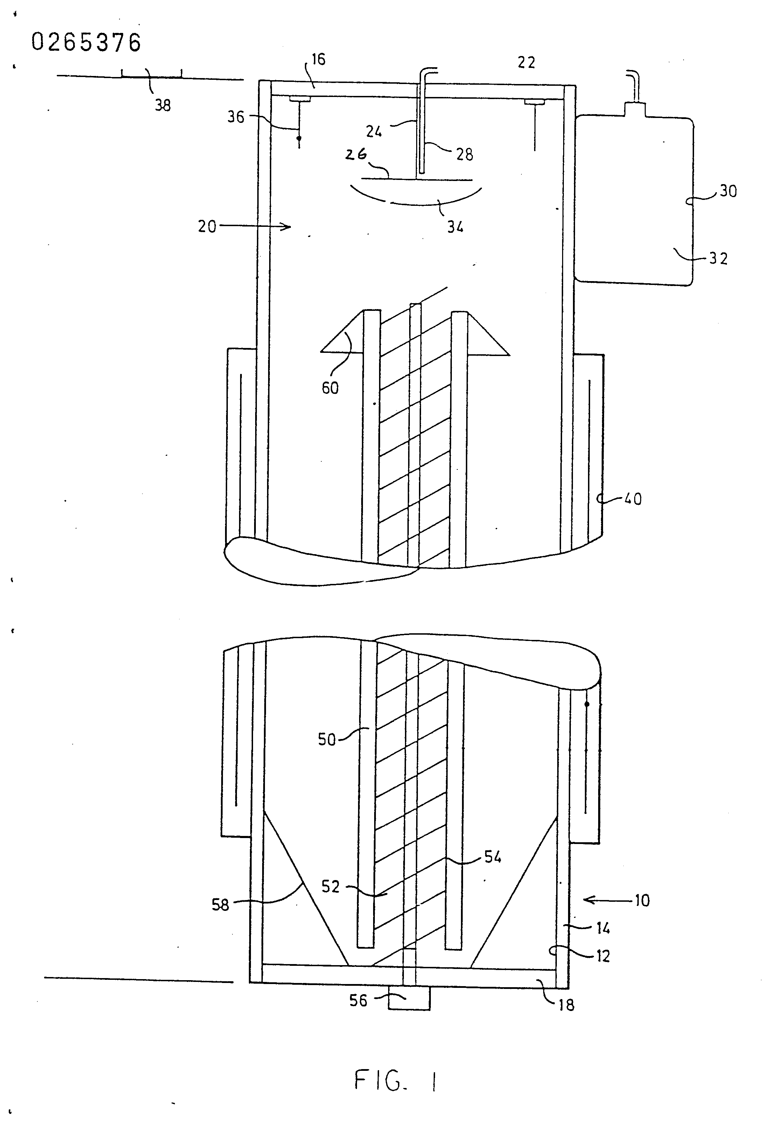

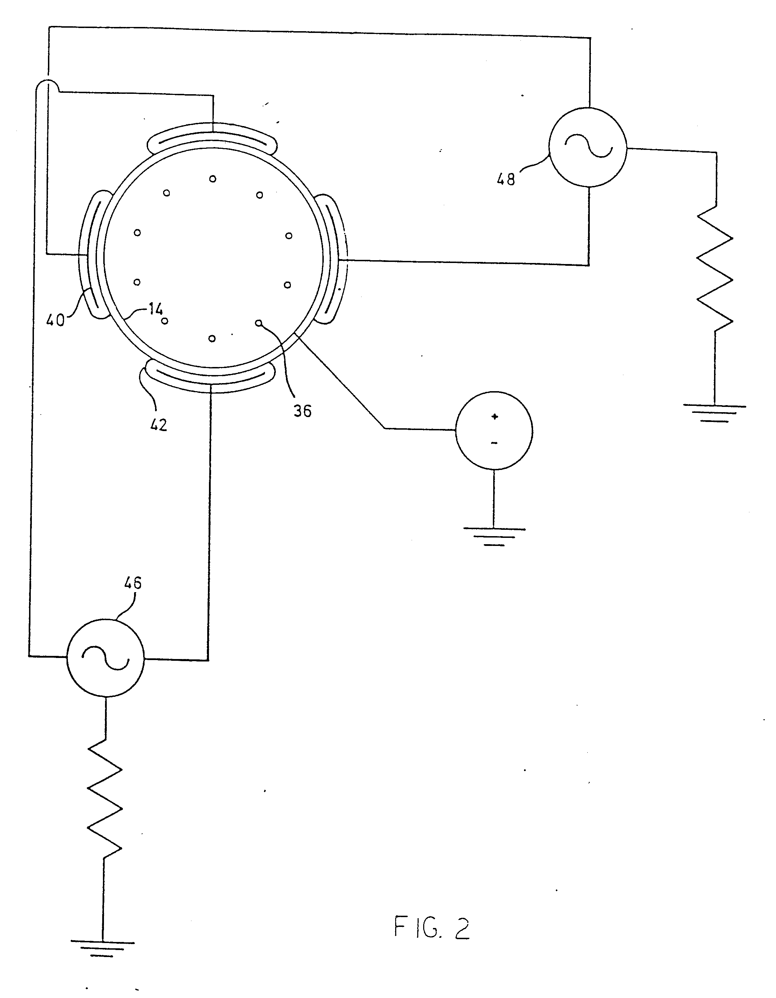

Referring, therefore, to figures 1 and 2, a coating apparatus 10 includes a housing 12 having side walls 14 and top and bottom walls 16, 18, respectively, that define a chamber 20. Mounted on the end wall 16 is a motor 22 that drives through a shaft 24 a disc 26.

A supply tube 28 is located adjacent the shaft 24 and terminates just above the disc 26. Supply tube 28 passes through the top wall 16 and is connected to a liquid reservoir 30 containing material 32 to be coated. The material 32 may be either liquid or solid form and dispensed from the reservoir 30 by a suitable handling device such as a pump. Material impinging the disc is atomised by the rotation of the disc.

A deflector 34 is located within the chamber 20 below the disc 26 and acts to direct material delivered by the supply tube 28 and that impinges upon the disc 26 outwardly and upwardly.

Mounted on the underside of the top plate 16 are a plurality of pins 36 arranged in a circle about the periphery of the disc 26 and connected to a common source of high tension voltage 38. The pins 36 are pointed at their lower end to provide an efficient corona discharge apparatus.

As can best be seen in figure 2, four electrodes 40 are disposed around the circumference of the side wall 14 in diametrically opposed pairs. The electrodes 40 are embedded within an insulating material 42. A pair of voltage generators 46, 48 are connected to respective pairs of the electrodes 40 to apply an a.c. voltage across the electrodes. The voltage generators 46, 48 each supply a sinusoidal voltage across the electrodes 40 of similar frequency but with the phases of the two supplies shifted by 90°. This arrangement produces a rotating electric field within the chamber 20 by virtue of the two oscillatory fields setup between the pairs of electrodes.

Located within the chamber 20 is a recirculating conveyor 50 having an auger 52 rotatable within a tube 54. The auger 52 is driven by a motor 56 and the lower end of the tube 54 is spaced from the bottom wall 18. The lower end of the chamber 20 is formed with a frustoconical insert 58 to direct material to the lower end of the auger 52. The auger 52 discharges at the upper end of tube 54 over a frustoconical material spreader 60.

The operation of the apparatus shown in figures 1 and 2 is as follows. The objects to be coated are placed within the chamber 20 and accumulate at the lower end of the conveyor 50. Rotation of the auger 52 causes the objects to be transferred to the upper end of the tube 54 and dispensed over the spreader 60 to free fall through the chamber 20. The coating material is dispensed from the reservoir 30 through the supply tube 28 where it impinges upon disc 26 that is rotated by the motor 22. The rotating disc causes the material to be atomised to form an aerosol of the coating material that is caused by the deflector 34 to pass by the lower ends of the pins 36. The high voltage applied by the source 38 to the pins 36 causes a corona discharge which transfers an electrostatic charge to the particles of the aerosol. As the particles of the aerosol descend through the chamber 20 they are subjected to the rotating electric field established by the electrodes 40 under the influence of the voltage generators 46, 48 and are caused to translate within the chamber. The translation induced by a pair of sinusoidal a.c. voltages out of phase by 90° will be generally circular with a magnitude dependent upon the intensity of the electric field.

As the objects to be coated freefall through the chamber 20 they pass through the rotating particles of the aerosol so that relative motion between the objects and the particles is spiral. This effectively increases the length of the relative trajectory that each particle is in proximity to the objects to be coated and thus increases the chance of the particles adhering to the object.

After the objects have fallen through the chamber they are recirculated by the conveyor 50 until the required degree of coating has been achieved.

The provision of the charging of the particles of the aerosol and the rotating electric field induce a bodily translation of the aerosol that is beneficial in increasing the coating efficiency of the apparatus. This is achieved without causing the object to pass through a bulk of the coating material and therefore assists in providing an even coating with the coated objects readily removable from the chamber.

Variations to the apparatus shown in figure 1 can be made, such as by providing a pair of high tension sources 38 of opposite polarity. In this case, one half of the pins 36 would be supplied from one of the sources 38, with the other half supplied from the other. There would thus be an equal increase in charges of opposite polarity which would avoid the generation of a space charge within the chamber 20.

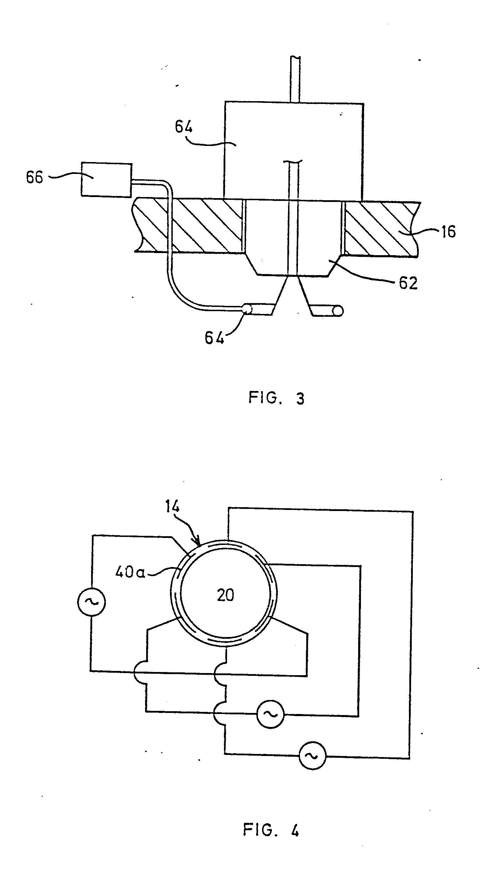

As is indicated in figure 3, alternative charging techniques may be used. In the arrangement shown in figure 3, the rotating disc 26 is replaced by an atomising nozzle 62 that discharges an aerosol of the coating material into the chamber 20. A ring 64 is disposed about the nozzle and connected to a high tension source 66. The ring 64 acts to induce a charge on the particles of coating dispensed from the nozzle 62. If preferred, a plurality of nozzles such as that shown in figure 3 can be disposed about the top surface 16 to provide a uniform distribution of coating material within the chamber 20. With the arrangement shown in figure 3 it is possible to dispense from the reservoir 30 a solution of the coating material. Upon discharge into the chamber 20 and after acquisition of the charge induced by the ring 64, the solvent, typically water, is evaporated leaving ions to be transferred to the particles of the coating material. Such a technique can also be used where it is desirable to introduce the coating materials separately from a chargeable liquid.

Similarly, alternative atomising techniques may be used such as the introduction of the coating material as a dry powder entrained in a stream of gas and projected into the chamber at an appropriate location.

As may be seen in figure 4, alternative techniques of generating the rotating electric field can be employed. In the embodiment shown in figure 4, a three-phase supply is utilised with each pair of electrodes 40a, arranged in diametrically opposed pairs about the chamber. Each pair of electrodes is connected to its respective voltage source.

Similarly, it is not essential to use a sinusoidal voltage source and a squarewave form could be used if more practical. Alternatively, it would be possible to supply periodically an alternating current to cause oscillatory motion in one direction and then supply an alternating current in another direction to effect translation of the particles within the chamber. However, it is believed that the sinusoidal supply is most readily available and produces a predictable, uniform movement of the particles.

In the event that a pair of voltage sources 38 are used to induce charges of opposite polarity within the chamber, the motions produced on oppositely charged particles will be in opposite direction so that the probability of impingement on an object is increased.

The passage of the objects through the chamber may also be decreased by providing an appropriately small countercurrent of air from a fluidised bed located in the bottom wall 18. This ensures a uniform distribution of air across the chamber 20 and maintains the coating material in suspension.

## Claims

1. A method of applying a coating to an object characterized by the steps of producing an aerosol of discrete particles of said coating within a chamber, electrostatically charging said particles, passing said objects through said chamber to contact said particles and generating a rotating electric field within said chamber to impart oscillatory motion to each particle in a direction generally transverse to the direction of motion of articles passing through said chamber and thereby increase the probability of contact of said objects with said particles.

2. A method according to claim 1 including the step of charging a first portion of said particles electrostatically to a polarity opposite to that of a second portion of said particles.

3. A method according to claim 1 including the step of inducing an electrostatic charge on said particles.

4. A method according to claim 3 including the step of spraying an electrostatically charged liquid into said chamber, evaporating said liquid and transferring the electrostatic charge to said particles.

5. A method according to claim 1 wherein said aerosol is generated by impingement on a rotating disc.

6. A method according to claim 5 wherein said electrostatic charging is accomplished by corona discharge.

7. A method according to claim 1 including the step of generating said rotating electric field by applying an a.c. voltage between opposed pairs of electrodes, a plurality of such pairs being disposed about said chamber.

8. A method according to claim 7 wherein the a.c. voltage applied to each pair is of similar frequency and dissimilar phase.

9. A method according to claim 8 wherein said a.c. voltages are 90° out of phase.

10. A method according to claim 8 wherein said a.c. voltages are 120° out of phase.

11. A method according to claim 1 including the step of recirculating said objects through said chamber.

12. A method according to claim 11 wherein said objects free fall through said chamber.

13. A method according to claim 11 including the step of passing a stream of air through said chamber to maintain the aerosol of discrete particles in suspension.

14. Apparatus for applying a coating to an object comprising a chamber, atomising means to produce an aerosol of said coating in said chamber, charging means to impress an electrostatic charge upon the particles of said aerosol, means to introduce said object into said chamber and to cause it to pass in a direction therealong and means to generate a rotating electric field in said chamber to impart an oscillatory motion to each charged particle within said chamber in a direction generally transverse to the direction of motion of said object in said chamber.

15. Apparatus according to claim 14 wherein said rotating field generating means includes a first pair of electrodes located at spaced locations about said chamber and a source of a.c. voltage applied across said electrodes.

16. Apparatus according to claim 15 wherein said rotating electronic field generating means includes a further pair of electrodes, each of which is located between respective ones of said first pair of electrodes and a source of a.c. voltage applied across said further pair of electrodes.

17. Apparatus according to claim 16 wherein said electrodes are embedded within walls of said chamber.

18. Apparatus according to claim 14 wherein said atomising means is located within said chamber.

19. Apparatus according to claim 18 wherein said charging means is located about said atomising means to charge particles of said coating passing thereby.

20. Apparatus according to claim 19 wherein said charging means charge said particles of coating by induction.

21. Apparatus according to claim 19 wherein said charging means charge said particles of coating by corona discharge.

22. Apparatus according to claim 19 wherein said atomising means includes a rotating disc and said charging means is disposed about the periphery of said disc.

23. Apparatus according to claim 22 wherein said charging means includes a plurality of electrodes disposed about the periphery of said disc and each connected to a high tension voltage source.

24. Apparatus according to claim 16 including means to recirculate objects within said chamber.

25. Apparatus according to claim 24 wherein said means to recirculate objects includes an auger to elevate said object within said chamber.

0265376

38

16    22

36    24    28

26

20    34    30

32

60

40

50

54

52    10

58    14

12

56    18

FIG. 1

0265376

FIG. 2

0265376

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 478 939  (DEBRECENI) <br> * Page 4, line 30 - page 5, line 19; figure * <br> --- | 1,14 | B 05 B    5/08 <br> B 05 D    7/00 <br> A 01 C    1/06 <br> B 01 J    2/00 |
| A | FR-A-  538 610  (GRIMBERG) <br> * Page 1, lines 33-36 * <br> --- | 1,14 | |
| A | FR-E-   26 235  (GRIMBERG) <br> * Page 1, lines 27-39 * <br> --- | 1,14 | |
| A | EP-A-0 127 376  (PHARMINDEV) <br> --- | | |
| A | FR-A-2 132 840  (MASUDA) <br> --- | | |
| A | US-A-2 224 505  (UNGER) <br> --- | | |
| A | US-A-1 972 050  (DAVIS) <br> ----- | | |

TECHNICAL FIELDS SEARCHED (Int. Cl.4)

B 05 B
B 05 D
B 01 J
A 01 C
A 61 J
A 23 G

The present search report has been drawn up for all claims

| Place of search | Date of completion of the search | Examiner |
|---|---|---|
| THE HAGUE | 03-12-1987 | JUGUET J.M. |

EPO FORM 1503 03.82 (P0401)